# FASCICULE DE BREVET EUROPEEN

(11) **EP 1 353 830 B1**
(45) Date de publication et mention de la délivrance du brevet: **26.03.2008**
(21) Numéro de dépôt: 01998463.2
(22) Date de dépôt: 26.11.2001
(51) Int. Cl.: B60T 13/52, B60T 13/72

(54) **SERVOMOTEUR D'ASSISTANCE AU FREINAGE A ASSISTANCE HYDRAULIQUE COMPLEMENTAIRE**
BREMSKRAFTVERSTÄRKER MIT ZUSÄTZLICHER HYDRAULIK-HILFSKRAFT
BRAKE BOOSTER WITH COMPLEMENTARY HYDRAULIC POWER-ASSIST

(30) Priorité: 29.11.2000 FR 0015544
(43) Date de publication de la demande: 22.10.2003
(73) Titulaire: ROBERT BOSCH GMBH, 70442 Stuttgart (DE)
(72) Inventeur: GENDRIN, Stéphane, F-35170 BRUZ (FR); MARLHE, Nicolas, F-93270 SEVRAN (FR); PIEL, Jean-Marc, F-93700 DRANCY (FR)
(74) Mandataire: Hurwic, Aleksander Wiktor
(86) Numéro de dépôt international: PCT/FR2001/003713
(87) Numéro de publication internationale: WO 2002/043997

(56) Documents cités:
- WO-A-99/38741
- DE-A- 19 632 130
- DE-C- 19 825 110
- US-A- 5 842 751

## Description

La présente invention a pour objet un servomoteur pneumatique d'assistance au freinage à assistance hydraulique complémentaire ainsi qu'un procédé d'assistance au freinage avec un tel servomoteur. L'invention a pour but de rendre plus fiable le fonctionnement de l'assistance complémentaire et de rendre parfaitement linéaire une action de freinage en fonction d'une commande de freinage. Le domaine d'application de l'invention est plus généralement celui du contrôle général du freinage d'un véhicule. Le document WO 99/38741 A1 décrit un servomoteur d'assistance hydraulique complémentaire conventionel.

Un servomoteur pneumatique d'assistance au freinage comporte dans son principe une chambre avant à volume variable séparée d'une chambre arrière également à volume variable par une cloison formée par une membrane étanche et souple et par une plaque-jupe rigide. La jupe rigide entraîne un piston pneumatique prenant appui, par l'intermédiaire d'une tige de poussée, sur un piston primaire d'un maître cylindre d'un circuit hydraulique de freinage, typiquement un maître cylindre tandem. La chambre avant, placée du côté du maître cylindre, est reliée pneumatiquement à une source de vide. La chambre arrière, opposée à la chambre avant, et placée du côté d'une pédale de frein, est reliée pneumatiquement, de manière contrôlée par une valve, à une source de fluide propulseur, typiquement de l'air sous pression atmosphérique. Au repos, c'est à dire lorsqu'un conducteur n'appuie pas sur la pédale de frein, les chambres avant et arrière sont connectées entre elles alors que la chambre arrière est isolée par rapport à la pression atmosphérique. Lors du freinage, on isole tout d'abord la chambre avant par rapport à la chambre arrière, puis on admet de l'air dans la chambre arrière. Cette admission d'air a pour effet de propulser la cloison et de mettre en oeuvre l'assistance de freinage pneumatique.

Il est par ailleurs connu des assistances de freinage hydraulique. Typiquement un moteur électrique est relié à une pompe hydraulique qui injecte un fluide sous pression dans les circuits de freinage au moment où ceux-ci sont sollicités. Le contrôle de ce moteur électrique est réalisé par une mesure des pressions régnant dans les chambres avant et arrière du servomoteur pneumatique d'assistance au freinage. On utilise donc deux détecteurs de pression, raccordés pneumatiquement à chacune de ces chambres pour en mesurer la pression. Ces détecteurs fournissent des signaux électriques représentatifs de ces pressions.

Le système d'assistance hydraulique complémentaire a d'une manière connue pour objet principal de concourir à éviter le blocage des roues au moment d'un freinage brutal. Un tel système connu sous le nom de système d'anti-blocage de roues, ABS dans la littérature anglo-saxonne, permet de moduler la pression hydraulique dans le circuit freinage. Ce système permet d'appliquer, ou de ne pas appliquer alternativement, un complément de pression hydraulique dans le circuit hydraulique de façon à ce que la pression appliquée dépasse ou ne dépasse pas une pression limite au-delà de laquelle les roues se bloquent.

Une évolution de ces circuits hydrauliques d'assistance complémentaire de freinage à été imposée par la réduction de poids des véhicules. En effet cette réduction a amené à réduire la taille du servomoteur pneumatique d'assistance au freinage, la taille des chambres avant et arrière. Du fait de la réduction de taille, et du fait que la haute pression utilisée est la pression atmosphérique (qui est sensiblement toujours la même), l'effet d'assistance procuré par l'assistance pneumatique voit son efficacité réduite. L'assistance hydraulique complémentaire a alors pour objet de procurer un complément d'assistance, tendant à appliquer dans le circuit hydraulique une surpression hydraulique de façon à pouvoir atteindre une pression hydraulique supérieure à celle nécessaire pour bloquer les roues d'un véhicule qui freine.

En pratique, la fonction d'assistance pneumatique lie d'une manière linéaire la force d'un effort exercé par un conducteur à la pression hydraulique du circuit de freinage : à l'efficacité du freinage. Cependant, cette relation linéaire ne se réalise que tant que la haute pression admise dans la chambre arrière peut exercer en assistance un effort de freinage. Dans la pratique, il existe un équilibre de la position d'une pédale de frein. Cet équilibre résulte d'une part de l'effort exercé par le conducteur additionné à l'assistance pneumatique et d'autre part de la réaction hydraulique du circuit de freinage. Pour éviter la fatigue du conducteur, on admet par ailleurs un rapport entre l'assistance pneumatique et cet effort du conducteur qui est de l'ordre de cinq, ou autres valeurs selon les différents systèmes.

A partir du moment où la chambre arrière de l'assistance pneumatique est soumise à la pression atmosphérique (et ne peut plus être soumise à une pression plus forte) et où la chambre avant est soumise à la dépression maximale que peut procurer la pompe à vide, l'assistance pneumatique ne joue plus. Dans ces conditions, pour la partie complémentaire l'effort de freinage n'est plus fourni que par le conducteur. La pression régnant dans le circuit hydraulique au moment où ce phénomène se produit est appelée la pression de saturation.

La courbe de correspondance entre la pression dans le maître cylindre et la force exercée par le conducteur subit donc une première croissance selon une pente dite d'assistance, assez raide jusqu'à cette valeur de pression de saturation. Elle évolue ensuite avec une pente bien plus faible, due à l'effort du conducteur uniquement.

Quand le système d'assistance pneumatique de freinage était volumineux, cette pression de saturation se trouvait au-delà de la pression pour laquelle le blocage des roues du véhicule se produisait. Charge était donc laissée au conducteur, ou bien à un système d'anti-blocage de roues, de veiller à cet autre problème. Cependant, du fait de la réduction de taille des servomoteurs pneumatiques, la pression de saturation est maintenant atteinte dans le circuit hydraulique avant que ne soit atteinte la pression à laquelle se provoque le blocage des roues. Dans ce but, un circuit d'assistance hydraulique complémentaire, typiquement une pompe hydraulique, prend le relais de cette action d'assistance pneumatique.

Cette assistance complémentaire, pour un bon confort d'utilisation par un conducteur, doit néanmoins se produire dans la continuité des efforts déployés par ce conducteur. Ceci signifie que le rapport entre l'effort exercé par le conducteur et la pression hydraulique agissant sur les roues doit être le même, ou similaire, au rapport préexistant à la mise en oeuvre de l'assistance hydraulique complémentaire. Correspondant à la pression de saturation dans le circuit hydraulique, il existe un effort dit de saturation pour lequel cette pression de saturation est atteinte. On mesure donc dans les circuits hydrauliques d'assistance complémentaire l'effort exercé par le conducteur, on soustrait l'effort de saturation et on multiplie la différence par le coefficient d'amplification préexistant pendant l'assistance pneumatique.

En agissant ainsi, on obtient alors comme résultat pour le conducteur que l'assistance se produit toujours avec une même efficacité, que son origine soit pneumatique ou hydraulique. Le conducteur ne s'en rend pas compte. Pour mesurer la pression de saturation ou l'effort de saturation, plusieurs systèmes sont envisageables dont le principe est de comparer entre elles les pressions existantes, au moment de cette saturation, dans les chambres avant, chambres arrières, ou dans divers endroits du circuit hydraulique.

Cependant, un tel système d'assistance hydraulique complémentaire présente dans certains cas un fonctionnement anormal, gênant. Ce fonctionnement anormal gênant provient d'une l'augmentation brusque du vide dans la chambre avant lors d'un freinage. Cette augmentation brusque du vide peut par exemple être provoquée par l'enclenchement d'une vitesse inférieure dans la boîte de vitesse. Cette vitesse inférieure provoque elle-même une accélération de la rotation du moteur (frein moteur) laquelle provoque une aspiration plus grande et donc une dépression plus grande portée dans la chambre avant.

L'origine de cette dépression plus grande dans la chambre avant peut également résulter d'un fonctionnement d'un clapet anti-retour présent à l'admission du vide dans cette chambre avant. En effet une fuite calibrée, de faible valeur, par exemple de 15 millibars par seconde, provoque une augmentation de pression dans la chambre avant. Il est possible que la pression dans la chambre avant passe, du fait de cette fuite, un seuil de tarage de ce clapet anti-retour. Dans ces conditions, la chambre avant est à nouveau soumise au vide. La valeur de tarage d'un tel clapet anti-retour est de l'ordre de 25 millibars. De ce fait un à-coup de dépression de l'ordre de 25 millibars peut être appliqué à la chambre avant.

Si les deux phénomènes, enclenchement d'une vitesse inférieure dans la boîte de vitesse, et rafraîchissement du vide dans la chambre avant se produisent simultanément, il est possible que la chambre avant soit le siège d'une dépression supplémentaire, de l'ordre de 50 millibars. Dans ce cas, et si l'assistance pneumatique est en régime de saturation, un déréglage du système d'assistance hydraulique complémentaire se produit. Tout ce passe alors comme si cette dépression brutalement apportée était interprétée par le circuit d'assistance hydraulique complémentaire comme un effort brutal appliqué par le conducteur. Le phénomène d'amplification produit par l'assistance hydraulique complémentaire conduit alors un surfreinage tendant à bloquer les roues immédiatement. Dans la pratique ce phénomène est compensé par une mise en service du système d'antiblocage de roues de sorte qu'aucun effet néfaste ne se produit sur la conduite. Cependant, dans le cas exceptionnel où une telle situation se produirait, une telle solution est désagréable et n'est pas satisfaisante.

Dans l'invention, on cherche à remédier à ce problème. Dans l'invention, la solution trouvée consiste à compenser dans le circuit hydraulique, par un recalibrage rapide, le décalage, le fonctionnement hystérétique, du circuit assistance pneumatique. Pour connaître ce fonctionnement hystérétique, on mesure alors dans l'invention des paramètres de pression régnant dans des chambres avant et/ou arrière et/ou dans le circuit hydraulique avant la mise en oeuvre de l'assistance hydraulique complémentaire. Puis, en permanence, quand cette assistance hydraulique complémentaire est mise en service, on compare ces paramètres avec leurs valeurs courantes aux paramètres préalablement enregistrés. Si on détecte avec ces comparaisons une modification des conditions dans lesquelles a été mise en oeuvre l'assistance hydraulique complémentaire, on modifie cette assistance hydraulique complémentaire pour éviter ces déréglages intempestifs : surfreinage, voire défreinage. En pratique dans l'invention on mesure la pression dans la chambre avant, avant la mise en oeuvre du circuit hydraulique d'assistance complémentaire, et on re-mesure cette pression de chambre avant en permanence au moment de l'utilisation. On modifie alors la valeur de la pression de saturation utilisée en fonction de cette variation (éventuelle) de cette dépression dans la chambre avant. En agissant ainsi on évite les à-coups de freinage.

L'invention à donc pour objet un servomoteur pneumatique d'assistance au freinage comportant une chambre avant connectable à une source de vide, une chambre arrière connectable à une arrivée haute-pression, une cloison mobile étanche entre les deux chambres, un équipage mobile emporté avec la cloison mobile et relié à un circuit hydraulique de freinage, un dispositif pour admettre un fluide haute pression dans la chambre arrière au moment d'un freinage, et des moyens d'assistance complémentaire hydraulique muni d'un actionneur hydraulique, caractérisé en ce que ces moyens d'assistance complémentaire comportent en outre un circuit électronique
- qui mémorise une première pression régnant dans une des chambres, avant une mise en oeuvre de ces moyens d'assistance complémentaire,
- qui mesure une deuxième pression régnant dans une des chambres, pendant cette mise en oeuvre, et
- qui commande l'actionneur en fonction d'une différence entre cette première et cette deuxième pression.

Dans un mode préféré, les mesures sont effectuées dans la chambre avant.

L'invention à également pour objet un procédé d'assistance au freinage avec un servomoteur pneumatique d'assistance au freinage dans lequel
- on met en oeuvre dans le servomoteur un dispositif pneumatique d'assistance au freinage,
- on met en oeuvre dans le servomoteur à titre complémentaire un dispositif hydraulique d'assistance au freinage,
- une fonction de l'assistance par le dispositif hydraulique dépend d'un premier état de dépression dans le dispositif pneumatique avant la mise en oeuvre du dispositif hydraulique,
caractérisé en ce que, lors d'un freinage,
- on mesure un deuxième état de dépression dans le dispositif pneumatique après la mise en oeuvre du dispositif hydraulique, et
- on modifie la fonction de l'assistance hydraulique en fonction d'une différence de mesure entre ce premier et ce deuxième état.

L'invention sera mieux comprise à la lecture de la description qui suit et à l'examen des figures qui l'accompagnent. Celles-ci ne sont présentées qu'à titre indicatif et nullement limitatif de l'invention. Les figures montrent :
- Figure 1 : Une représentation schématique d'un servomoteur pneumatique d'assistance au freinage hydraulique conforme à l'invention ;
- Figure 2 : Un diagramme montrant la correspondance entre un effort exercé par un conducteur et une pression régnant dans un maître cylindre de frein, avec et sans le dispositif d'assistance hydraulique complémentaire de l'invention.

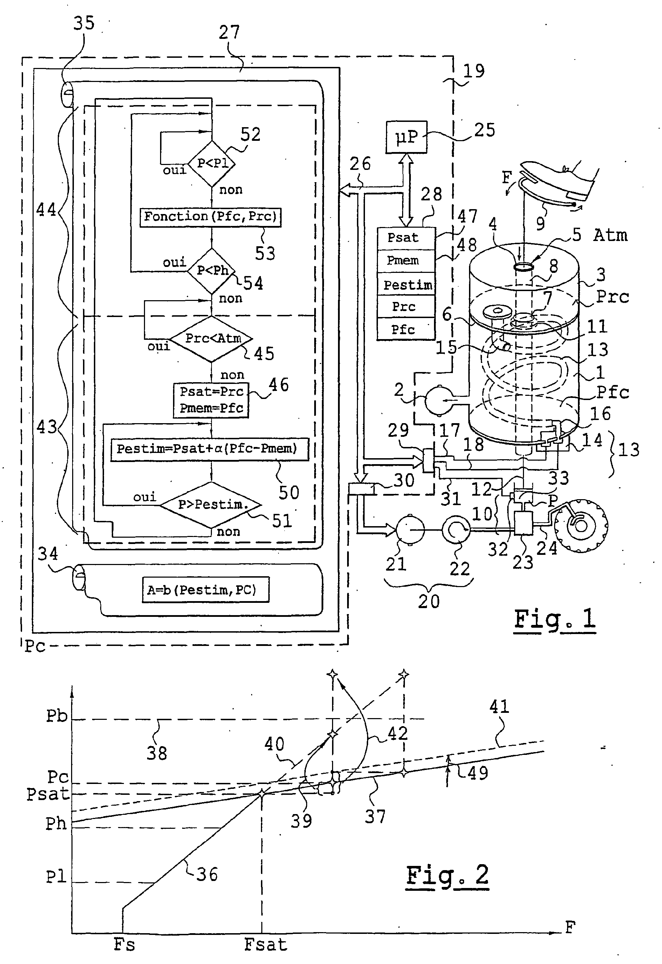

La Figure 1 montre un servomoteur pneumatique d'assistance au freinage conforme à l'invention comportant une chambre avant 1 connectable à une source de vide 2. Typiquement la source 2 peut être constituée par une prise des gaz d'admission d'un moteur à essence d'un véhicule. Pour un véhicule avec un moteur diesel, on utiliserait une pompe à vide externe. Le servomoteur pneumatique d'assistance au freinage comporte également une chambre arrière 3 connectable, par exemple par une valve schématique 4, à une arrivée 5 haute pression : typiquement de l'air ambiant à une pression atmosphérique Atm. Le servomoteur pneumatique d'assistance au freinage comporte par ailleurs une cloison mobile 6 munie habituellement d'une jupe rigide et d'une membrane étanche. La membrane empêche la communication pneumatique entre les deux chambres. La cloison 6 est percée d'un orifice étanche 7 pour laisser passer un équipage mobile 8. L'équipage 8 est relié mécaniquement d'une part à une pédale de frein 9 et d'autre part à un circuit 10 hydraulique de freinage. Le principe de l'assistance procuré par un tel servomoteur pneumatique d'assistance au freinage est le suivant. Sous l'action de la pédale 9, l'équipage mobile 8 plonge dans la chambre arrière dégageant la valve 4 par laquelle l'air ambiant s'introduit dans la chambre arrière 3. L'air ambiant exerce alors une pression sur la cloison 6 qui entraîne, par l'intermédiaire d'un appui 11 solidaire de l'équipage mobile 8, l'équipage mobile 8 de manière à ce qu'une extrémité 12 de ce dernier actionne le circuit hydraulique de freinage 10.

Le servomoteur pneumatique d'assistance au freinage comporte en outre, dans un exemple préféré, un conduit souple hélicoïdal 13. Le conduit souple hélicoïdal 13 permet de relier d'une manière étanche la chambre arrière 3 à un détecteur de pression 14 monté à l'avant de la chambre avant. Le conduit souple hélicoïdal 13 débouche dans la chambre arrière 3, au travers de la cloison 6, par l'intermédiaire d'une pipe 15. Une autre pipe 16 relie le conduit souple 13 au détecteur 14. Le détecteur 14 est également en regard d'un autre orifice de la chambre avant. Le détecteur 14 est ainsi= capable de produire deux signaux transmis par des connexions 17 et 18 à un circuit électronique 19 de commande. Le détecteur 14 prélève ainsi une information de pression transmise par la connexion 17 qui est relative à une pression Pfc régnant dans la chambre avant 1, et, par la connexion 18, à une pression Prc régnant dans la chambre arrière 3.

Des moyens d'assistance complémentaire hydraulique du servomoteur pneumatique d'assistance au freinage comportent dans leur principe un actionneur hydraulique 20 muni, ici, d'un moteur 21 électrique qui entraîne une pompe 22. La pompe 22 injecte par l'intermédiaire d'un coupleur 23 un fluide d'hydraulique dans un des conduits 24 du circuit hydraulique 10. La mise en oeuvre de l'assistance hydraulique 20 vient compléter (ou neutraliser dans le cas du système d'anti-blocage de roues) l'élévation de la pression dans le conduit 24.

Dans l'invention, les moyens d'assistance complémentaire hydraulique comportent en outre le circuit électronique 19, représenté ici d'une manière conventionnelle par un microprocesseur 25 relié par un bus 26 de commandes, d'adresses et des données à une mémoire programme 27, à une mémoire de donnée 28, à une interface d'entrée 29 et à une interface de sortie 30. Les connexions 17 et 18 sont raccordées à l'interface 29 ainsi qu'une connexion 31 provenant d'un détecteur 32 de la pression Pc régnant dans un maître cylindre 33 du circuit hydraulique 10. Dans la pratique, le circuit électronique 19 peut former un microcontrôleur (microprocesseur muni de sa mémoire programme sur un même circuit intégré).

La mémoire programme 27 comporte d'une manière connue un premier programme 34 destiné à produire un signal de commande A à appliquer, par l'intermédiaire de l'interface 30, en commande à l'assistance hydraulique 20. La mémoire programme 27 comprend également, selon l'invention, un autre programme 35 dont le contenu sera expliqué plus loin. Sur le plan pratique, les programmes 34 et 35 peuvent être fondus en un seul programme le circuit électronique 19. pouvant être considéré comme une machine d'états à évolution programmée.

La figure 2 montre le principe de l'assistance de freinage pour un système muni une assistance pneumatique puis hydraulique. En abscisses, le diagramme sert à indiquer les efforts F exercés par le conducteur du véhicule pour freiner son véhicule. En ordonnées, sont représentées les pressions Pc dans le maître cylindre qui résultent des efforts F. Lorsque le conducteur freine, au début son effort s'oppose aux réactions de la pédale seule. Puis, pour un effort supérieur à un seuil Fs donné, le freinage assisté se met en service. Au moment de ce freinage assisté, la courbe de correspondance de la pression Pc à l'effort F suit approximativement une droite 36 dite droite d'assistance, indiquant que la pression dans le maître cylindre résulte d'une part de l'effort F et d'autre part de l'assistance apportée par le servomoteur pneumatique d'assistance au freinage 1.

Cette relation proportionnelle s'exerce jusqu'à ce que la force F atteigne une force dite de saturation, Fsat. A la force Fsat correspond une pression dans le maître cylindre égal à Psat. Quand Pc vaut Psat, la pression dans la chambre arrière 3 est devenue égale à la pression atmosphérique, et l'ouverture complémentaire de la valve 4 ne peut plus apporter d'assistance pneumatique. Dans ce cas, sans assistance complémentaire, la courbe de correspondance suit une droite 37 de correspondance directe dans laquelle seul l'effort appliqué par le conducteur fait augmenter la pression dans le circuit hydraulique 10.

La figure 2 montre encore une horizontale 38 indiquant la pression Pb pour laquelle les roues du véhicule sont amenées à se bloquer. Dans l'exemple schématiquement montré, du fait de la réduction de la taille du servomoteur pneumatique d'assistance au freinage, l'assistance pneumatique est insuffisante pour atteindre cette pression de blocage sans un appui exagéré du pied sur la pédale 9. La figure 2 montre encore; d'une manière schématique par la flèche 39, l'effet de l'amplification hydraulique procuré par le programme 34 du circuit 19. En principe, ce programme 34 mesure l'écart de pression entre la pression courante Pc dans le maître cylindre et la pression Psat à laquelle l'assistance selon la droite 36 a cessé. La différence de pression Pc - Psat est multipliée par un coefficient multiplicateur par le programme 34, et un ordre correspondant A est appliqué à l'entrée du moteur 21 pour que la pression disponible dans le circuit 24 soit augmentée, à partir de la pression courante Pc par un supplément proportionnel à l'écart entre les pressions Pc et Psat. Ceci est schématiquement représenté par la continuation 40 de la droite d'assistance 36.

Le problème provoqué par une augmentation brutale de la dépression dans la chambre avant 1 est schématiquement représenté par la courbe en pointillés 41 globalement parallèle à la droite 37 et situé légèrement haut dessus. Au moment où la pression de la chambre avant baisse brutalement, du fait de cette dépression, et du fait que le pied du conducteur ne bouge pas à ce moment sur la pédale (le phénomène est trop rapide), la jupe 6 est déplacée jusqu'à rétablir l'équilibre indiqué ci-dessus. Comme d'un côté la composition effort du pied plus dépression augmente brutalement, il en résulte une augmentation brutale de la pression courante Pc mesurée par le détecteur 32. Au lieu de prendre alors comme terme de correction un écart pression courante Pc (avant la dépression subite) - Psat, l'écart pris en considération est maintenant égal à l'écart précédent augmenté de la surpression subite. Il en résulte qu'au lieu de la correspondance 39, l'assistance hydraulique complémentaire provoque une assistance 42. Cette assistance 42 étant trop importante, l'effort exercé sur la roue dépasse la pression de blocage Pb. Dans ce cas la roue se bloque, le système antiblocage se met en service. Il en résulte une impression désagréable de conduite.

Dans l'invention, pour remédier à ce problème, on décide au cours d'une deuxième phase 43 du programme 35 de vérifier en temps réel une ou des pressions en différentes parties du circuit par rapport aux valeurs que ces pressions avaient au moment où l'assistance pneumatique est arrivée en saturation. La phase 43 est postérieure à une phase 44 de ce même programme 35. Cette phase 44 sera expliquée plus loin. La deuxième phase 43 comporte un premier test 45 au cours duquel on mesure que la pression dans la chambre arrière est inférieure à la pression atmosphérique : Prc inférieur à Patm. En effet, si cette pression Prc est inférieure à la pression atmosphérique l'assistance pneumatique 1 a encore des possibilités d'apporter son assistance. Si c'est le cas, le test 45 boucle sur lui-même avec une fréquence élevée, par exemple de l'ordre de 1 MHz. Tout le microprocesseur 25 peut être cadencé avec une fréquence supérieure (facilement 100 MHz actuellement). En agissant ainsi on est capable de détecter l'instant exact, à une microseconde près, où la pression dans la chambre arrière 3 atteint la pression atmosphérique. Au besoin on changera les fréquences de l'horloge du microprocesseur 25 pour tenir compte de contraintes de précision temporelle.

Lorsque la pression dans la chambre arrière n'est plus inférieure à la pression atmosphérique, au cours d'une étape 46 lancée immédiatement après ce test 45 (dans la microseconde qui suit), on mesure la pression courante Pc et on la mémorise comme valeur Psat dans une zone d'enregistrement 47 de la mémoire 28. On mesure également la pression Pfc dans la chambre avant, que l'on mémorise en zone 48 sous un nom d'une variable Pmem. Ceci étant acquis, on a mesuré deux paramètres importants pour surveiller des phénomènes 49 d'augmentation de dépression dans la chambre avant 1. On pourrait toutefois montrer que la détection de ces phénomènes 49 peut être réalisée en mesurant des pressions à d'autre endroits. En effet, toutes les valeurs des pressions sont liées entre elles. Eventuellement un retard à la détection peut être remarqué si d'autres pressions sont mesurées dans ce but.

Au cours d'une étape 50 immédiatement suivant l'étape 46, par exemple dans la même microseconde que celle de l'étape 46, on impose à une variable dite Pestim de prendre une valeur égale à Psat + α(Pfc-Pmem). Ce faisant, alors que Pfc est égale à Pmem, on obtient le résultat que la première fois Pestim est égal à Psat. Par contre, on voit bien que si la pression courante dans la chambre avant, Pfc, est amenée à évoluer, la correction apportée par l'étape 50 permet de tenir compte de l'écart. A cet effet, dans le programme 34, le calcul de l'ordre A se fait sur la base de Pestim. On peut ainsi supporter sans difficultés tous les écarts puis qu'ils sont neutralisés par l'étape 50.

II reste à savoir d'une part comment est détecté l'augmentation brutale de la dépression dans la chambre avant, et comment est calculé par ailleurs le coefficient α. Pour la détection de la dépression brutale dans la chambre avant 1, un test 51 (postérieur à l'étape 50) permet de comparer la pression courante Pc à la valeur corrigée de la pression saturation : Pestim. En effet, en temps normal la pression courante Pc est supérieure à Pestim (qui au départ vaut Psat). Si c'est le cas, l'étape 50 et le test 51 sont entrepris en boucle. A l'étape 50, à chaque fois une nouvelle valeur de Pfc est prise en compte.

La seule présence de l'étape 50 et du rebouclage normal du test 51 lorsque cette pression Pc est supérieure à Pestim conduit, avec une périodicité égale à la périodicité de ce rebouclage, à prendre en considération immédiatement la modification Pfc de la dépression dans la chambre avant. Par exemple, on peut admettre que la fréquence de rebouclage de l'étape 50 et du test 51 soit également de l'ordre de 1 MHz. Ce rebouclage conduit à un retard léger de perception égal à une microseconde. Compte tenu de l'inertie par ailleurs des différents mécanismes mis en service, le moteur 21, la pompe 22 sans oublier la tringlerie de freinage elle-même, la correction est appliquée avant que l'erreur ne puisse avoir des effets néfastes.

Par contre, si la pression courante Pc devient inférieure à la pression estimée Pestim, c'est-à-dire en pratique à Psat, alors l'assistance hydraulique complémentaire n'est plus nécessaire. Dans ce cas, le système se reboucle sur la première phase 44.

En pratique, en cours de celle ci, on mesure la valeur du coefficient α. La valeur du coefficient α est tout simplement représentative de la pente de la droite assistance 36. Compte tenu de l'existence du seuil de déclenchement Fs, on décide au cours d'un test 52 de la phase 44, de ne commencer à prendre en considération la pente 36 que lorsque la pression courante Pc mesurée par le capteur 32 est supérieure à une pression inférieure PI d'apprentissage, elle-même située après le saut de Fs. On considère en effet dans l'invention que si cette pression courante est supérieure à cette pression inférieure d'apprentissage, la correspondance de la courbe 36 est linéaire et peut être prise en considération. Dans ce cas, au cours d'une étape 53 ultérieure, on calcule α. La valeur de α est une fonction, à tout moment, de la pression dans la chambre avant Pfc et dans la chambre arrière Prc. On pourrait par ailleurs établir cette correspondance en se servant également de la pression courante Pc mesurée. En effet, compte tenu de l'équilibre indiqué précédemment, ces trois pressions sont cohérentes entre elles et sont reliées par une relation unique. Ce faisant, on réitère le calcul de l'étape 53 tant qu'un test ultérieur 54 n'a pas révélé que la pression hydraulique courante avait atteint un seuil supérieur d'apprentissage : Ph. Pendant cette période on effectue en boucle le test 52 et l'étape 53. Le calcul de l'étape 53 correspond aux réglages qui étaient entrepris dans l'état de la technique pour assurer la continuité des proportions 36 et 40. La particularité de l'invention se situe cependant dans le fait que ce calcul est entrepris à chaque nouveau freinage. De ce fait aucun tarage normalisé des équipements n'est nécessaire : celui-ci est réalisé automatiquement. Il prend de ce fait en compte le vieillissement du dispositif.

Lorsque ce seuil Ph est atteint, le programme 35 entre dans la phase 43. Il n'est pas nécessaire que le rebouclage des étapes 52, 53 et 54 soit aussi rapide que le rebouclage du test 45 et des étapes 50 et 51. Cependant, pour des raisons d'homogénéité, on pourra admettre que la scrutation se réalise avec la même fréquence, 1 MHz dans un exemple. Autrement dit, la première phase 44 a pour but de mesurer α dans une partie de la courbe 36 où celle ci est parfaitement linéaire Compte tenu des décalages à l'origine de la courbe 36, il est peut être nécessaire d'élaborer le coefficient α et la pente de cette courbe sur la base de deux mesures successives (entre un point d'extrémité et un point origine d'un segment porté par la droite 36). Si on veut simplifier le calcul, on peut considérer que cette droite passe approximativement par l'origine des abscisses et des ordonnées et obtenir la valeur de pente α avec un seul point, le dernier mesuré avant le test 54.

## Revendications

1. - Servomoteur pneumatique d'assistance au freinage comportant une chambre avant (1) connectable à une source vide (2), une chambre arrière (3) connectable à une arrivée (4) haute pression, une cloison (6) mobile étanche entre les deux chambres, un équipage mobile (8) emporté avec la cloison mobile et relié à un circuit (10) hydraulique de freinage, un dispositif (5) pour admettre un fluide haute pression dans la chambre arrière au moment d'un freinage, et des moyens (19, 20) d'assistance complémentaire hydraulique muni d'un actionneur hydraulique, **caractérisé en ce que** ces moyens d'assistance complémentaire comportent en outre un circuit électronique (19)
- qui mémorise (48) une première pression (Pmem) régnant dans une (1) des chambres, avant une mise en oeuvre de ces moyens d'assistance complémentaire,
- qui mesure (14, 17) une deuxième pression (Pfc) régnant dans une (1) des chambres, pendant cette mise en oeuvre, et
- qui commande (34, A) l'actionneur en fonction (α) d'une différence (Pestim) entre cette première et cette deuxième pression.

2. - Servomoteur selon la revendication 1, **caractérisé en ce que** le circuit électronique comporte un microprocesseur (25) et une mémoire programme (27) contenant un programme enregistré (34, 35).

3. - Servomoteur selon la revendication 2, **caractérisé en ce que** le programme enregistré comporte des étapes pour produire un signal (A) à appliquer à l'actionneur hydraulique dont la valeur est fonction de la différence entre une troisième mesure de pression (Pc) de la pression hydraulique en un endroit du circuit hydraulique et une valeur estimée de cette pression hydraulique.

4. - Servomoteur selon la revendication 3, **caractérisé en ce que** la valeur estimée (Pestim) de la pression hydraulique est comparée (51) à une valeur courante (Pc) de cette pression hydraulique, et cette pression estimée est corrigée (50) quand cette pression estimée est inférieure à cette pression courante.

5. - Servomoteur selon l'une des revendications 1 à 4, **caractérisé en ce qu'**une des chambres où sont mesurées les premières et deuxièmes pressions est la chambre avant. (1)

6. - Procédé d'assistance au freinage avec un servomoteur pneumatique d'assistance au freinage dans lequel
- on met en oeuvre dans le servomoteur un dispositif (1-8) pneumatique d'assistance.au freinage,
- on met en oeuvre dans le servomoteur à titre complémentaire (23) un dispositif hydraulique (19, 20) d'assistance au freinage,
- une fonction de l'assistance par le dispositif hydraulique dépend d'un premier état de dépression (Pmem) dans le dispositif pneumatique avant la mise en oeuvre du dispositif hydraulique,
**caractérisé en ce que**, lors d'un freinage,
- on mesure (14) un deuxième état de dépression (Pfc) dans le dispositif pneumatique après la mise en oeuvre du dispositif hydraulique, et
- on modifie (50) la fonction de l'assistance hydraulique en fonction d'une différence de mesure entre ce premier et ce deuxième état.

7. - Procédé selon la revendication 6, **caractérisé en ce que**
- on établit la fonction de l'assistance hydraulique pendant une première phase (4.4) du freinage préalable à la mise en oeuvre du dispositif hydraulique.

8. - Procédé selon l'une des revendications 6 à 7, **caractérisé en ce que**
- on produit (34) un signal (A) de commande de l'assistance hydraulique dont une valeur est fonction de la différence entre une troisième mesure (Pc) de pression de la pression hydraulique courante en un endroit du circuit hydraulique d'assistance et une valeur estimée (Pestim) de cette pression hydraulique.

9. - Procédé selon la revendication 8, **caractérisé en ce que**
- on compare la valeur estimée de la pression hydraulique à une valeur courante de cette pression hydraulique, et cette pression estimée est corrigée tant que cette pression estimée reste inférieure à cette pression-courante.

## Claims

1. Pneumatic brake-booster comprising a front chamber (1) that can be connected to a source of vacuum (2), a rear chamber (3) that can be connected to a high-pressure inlet (4), a sealed moving partition (6) between the two chambers, a moving gear (8) carried along with the moving partition and connected to a hydraulic braking circuit (10), a device (5) for letting a high-pressure fluid into the rear chamber at the time of braking, and additional hydraulic boost means (19, 20) equipped with a hydraulic actuator, **characterized in that** these additional boost means further comprise an electronic circuit (19)
- which stores in memory (48) a first pressure (Pmem) obtaining in one (1) of the chambers, prior to implementation of these additional boost means,
- which measures (14, 17) a second pressure (Pfc) obtaining in one (1) of the chambers during this implementation, and
- which controls (34, A) the actuator as a function (α) of a difference (Pestim) between this first and this second pressure.

2. Booster according to claim 1, **characterized in that** the electronic circuit comprises a microprocessor (25) and a programmable memory (27) containing a recorded program (34, 35).

3. Booster according to claim 2, **characterized in that** the recorded program comprises steps for producing a signal (A) to be applied to the hydraulic actuator, the value of which is a function of the difference between a third pressure measurement (Pc) of the hydraulic pressure at a point in the hydraulic circuit and an estimated value of this hydraulic pressure.

4. Booster according to claim 3, **characterized in that** the estimated value (Pestim) of the hydraulic pressure is compared (51) with a current value (Pc) of this hydraulic pressure, and this estimated pressure is corrected (50) when this estimated pressure is lower than this current pressure.

5. Booster according to any of claims 1 to 4, **characterized in that** one of the chambers in which the first and second pressures are measured is the front chamber (1).

6. Method for boosting braking using a pneumatic brake-booster in which
- a pneumatic brake boosting device (1-8) is implemented in the booster,
- a hydraulic brake boosting device (19, 20) is implemented in addition (23) in the booster,
- a function of the boosting by the hydraulic device depends on a first depression state (Pmem) in the pneumatic device prior to implementation of the hydraulic device,
**characterized in that**, during braking,
- a second depression state (Pfc) is measured (14) in the pneumatic device after implementation of the hydraulic device, and
- the function of the hydraulic boosting is modified (50) as a function of a difference in measurements between this first and this second state.

7. Method according to claim 6, **characterized in that**
- the function of the hydraulic boosting is established during a first phase (44) of braking prior to implementation of the hydraulic device.

8. Method according to any of claims 6 to 7, **characterized in that**
- a signal (A) for controlling hydraulic boosting and the value of which is proportional to the difference between a third pressure measurement (Pc) of the current hydraulic pressure at a point in the hydraulic boost circuit and an estimated value (Pestim) of this hydraulic pressure is produced (34).

9. Method according to claim 8, **characterized in that**
- the estimated value of the hydraulic pressure is compared with a current value of this hydraulic pressure, and this estimated pressure is corrected as long as this estimated pressure remains lower than this current pressure.

## Patentansprüche

1. Pneumatischer Servomotor zur Bremsunterstützung, mit einer vorderen Kammer (1), die an eine Vakuumquelle (2) angeschlossen werden kann, einer hinteren Kammer (3), die an eine Hochdruckzuführung (4) angeschlossen werden kann, einer dichten beweglichen Trennwand (6) zwischen den beiden Kammern, einer beweglichen Gruppe (8), die mit der beweglichen Trennwand mitgenommen wird und mit einem hydraulischen Bremskreis (10) verbunden ist, einer Vorrichtung (5), um bei einer Bremsung das Einströmen eines Hochdruckfluids in die hintere Kammer zu gestatten, und Mitteln (19, 20) für eine zusätzliche hydraulische Unterstützung, die mit einer hydraulischen Betätigungseinrichtung versehen sind, **dadurch gekennzeichnet, dass** diese Mittel für eine zusätzliche Unterstützung ferner einen elektronischen Kreis (19) aufweisen,
- der einen ersten Druck (Pmem) speichert (48), welcher in einer der Kammern (1) herrscht, bevor diese Mittel für eine zusätzliche Unterstützung eingesetzt werden,
- der einen zweiten Druck (Pfc) misst (14, 17), der während dieses Einsatzes in einer der Kammern (1) herrscht,
- der die Betätigungseinrichtung in Abhängigkeit (α) von einer Differenz (Pestim) zwischen diesem ersten und diesem zweiten Druck steuert (34, A).

2. Servomotor nach Anspruch 1, **dadurch gekennzeichnet, dass** der elektronische Kreis einen Mikroprozessor (25) und einen Programmspeicher (27) aufweist, welcher ein gespeichertes Programm (34, 35) enthält.

3. Servomotor nach Anspruch 2, **dadurch gekennzeichnet, dass** das gespeicherte Programm Schritte zur Erzeugung eines Signals (A) umfasst, das an die hydraulische Betätigungseinrichtung anzulegen ist und dessen Wert von der Differenz zwischen einem dritten Druckmesswert (Pc) des hydraulischen Drucks an einer Stelle des hydraulischen Kreises und einem geschätzten Wert dieses hydraulischen Drucks abhängig ist.

4. Servomotor nach Anspruch 3, **dadurch gekennzeichnet, dass** der geschätzte Wert (Pestim) des hydraulischen Drucks mit einem aktuellen Wert (Pc) dieses hydraulischen Drucks verglichen wird (51) und dieser geschätzte Druck korrigiert wird (50), wenn dieser geschätzte Druck kleiner ist als dieser aktuelle Druck.

5. Servomotor nach einem der Ansprüche 1 bis 4, **dadurch gekennzeichnet, dass** eine der Kammern, in welcher der erste und der zweite Druck gemessen werden, die vordere Kammer (1) ist.

6. Verfahren zur Bremsunterstützung mit einem pneumatischen Servomotor zur Bremsunterstützung, bei dem
- im Servomotor eine pneumatische Vorrichtung (1-8) zur Bremsunterstützung eingesetzt wird,
- im Servomotor zusätzlich (23) eine hydraulische Vorrichtung (19, 20) zur Bremsunterstützung eingesetzt wird,
- eine Funktion der Unterstützung durch die hydraulische Vorrichtung von einem ersten Unterdruckzustand (Pmem) in der pneumatischen Vorrichtung vor dem Einsatz der hydraulischen Vorrichtung abhängig ist,
**dadurch gekennzeichnet, dass** bei einer Bremsung
- ein zweiter Unterdruckzustand (Pfc) in der pneumatischen Vorrichtung nach dem Einsatz der hydraulischen Vorrichtung gemessen wird (14), und
- die Funktion der hydraulischen Unterstützung in Abhängigkeit von einer Messwertdifferenz zwischen diesem ersten und diesem zweiten Zustand verändert wird (50).

7. Verfahren nach Anspruch 6, **dadurch gekennzeichnet, dass**
- die Funktion der hydraulischen Unterstützung während einer ersten Bremsphase (44) vor dem Einsatz der hydraulischen Vorrichtung erstellt wird.

8. Verfahren nach einem der Ansprüche 6 bis 7, **dadurch gekennzeichnet, dass**
- ein Signal (A) zur Steuerung der hydraulischen Unterstützung erzeugt wird (34), bei dem ein Wert von der Differenz zwischen einem dritten Druckmesswert (Pc) des aktuellen hydraulischen Drucks an einer Stelle des hydraulischen Unterstützungskreises und einem geschätzten Wert (Pestim) dieses hydraulischen Drucks abhängig ist.

9. Verfahren nach Anspruch 8, **dadurch gekennzeichnet, dass**
- der geschätzte Wert des hydraulischen Drucks mit einem aktuellen Wert dieses hydraulischen Drucks verglichen und dieser geschätzte Druck korrigiert wird, solange dieser geschätzte Druck kleiner bleibt als dieser aktuelle Druck.
